# EUROPÄISCHE PATENTSCHRIFT

(11) **EP 1 861 308 B1**
(45) Veröffentlichungstag und Bekanntmachung des Hinweises auf die Patenterteilung: **17.02.2010**
(21) Anmeldenummer: 06708751.0
(22) Anmeldetag: 14.03.2006
(51) Int. Cl.: B62M 3/08

(54) **PEDAL FÜR EIN FAHRRAD**
BICYCLE PEDAL
PEDALE D'UNE BICYCLETTE

(30) Priorität: 17.03.2005 AT 4462005
(43) Veröffentlichungstag der Anmeldung: 05.12.2007
(73) Patentinhaber: Malle OEG - Technisches Büro für Maschinen- und Anlagenbau, 9181 Feistritz i. Ros (AT)
(72) Erfinder: MALLE, Manfred, A-9181 Feistritz I. Ros. (AT)
(74) Vertreter: Vinazzer, Edith
(86) Internationale Anmeldenummer: PCT/EP2006/060689
(87) Internationale Veröffentlichungsnummer: WO 2006/097461

(56) Entgegenhaltungen:
- WO-A-03/084808
- WO-A-2005/016736
- FR-A- 2 624 470

## Beschreibung

Die Erfindung betrifft ein Pedal für ein Fahrrad, welches an einer Tretkurbel um eine Pedalachse drehbar angeordnet ist, eine Aufnahme aufweist und mit einem an einem Schuh befestigbaren und ein Rastelement aufweisenden Schuheinsatz lösbar verbindbar ist, wobei die Verbindung durch Einrasten des Rastelementes in der Aufnahme gegen Federkraft und das Lösen der Verbindung durch Ausführen einer Drehbewegung des Rastelementes erfolgt, wobei die Aufnahme zur Pedalachse rotationssymmetrisch ausgeführt bzw. angeordnet und durch zwei Aufnahmeteile gebildet ist, welche gegen die Kraft zumindest der Feder, insbesondere einer Druckfeder, in Richtung Pedalachse voneinander wegbewegbar sind.

Ein Pedal der eingangs genannten Art ist aus der WO-A-03084808 bekannt. Bei diesem Pedal sind die Aufnahmeteile als einander zugewandte Aufnahmeschalen ausgeführt. Die eine der Aufnahmeschalen ist Bestandteil einer Hülse, die gegenüber der Pedalachse drehbar gelagert ist, die andere Aufnahmeschale ist Bestandteil einer weiteren Hülse, die in Richtung Pedalachse gegen die Kraft der Feder bewegbar ist. Bei diesem bekannten Pedal hat sich das Einführen und Einrasten des Rastelementes in den Spalt zwischen die beiden Aufnahmeschalen als relativ schwierig herausgestellt, da ein exaktes Positionieren des Rastelementes erforderlich ist.

Der Erfindung liegt somit die Aufgabe zugrunde, ein Pedal der eingangs genannten Art zu verbessern, insbesondere das Zentrieren und Positionieren des Rastelementes des Schuheinsatzes in der Aufnahme am Pedal wesentlich zu erleichtern.

Gelöst wird die gestellte Aufgabe erfindungsgemäß dadurch, dass die Außenseiten der beiden Aufnahmeteile miteinander fluchtende Zylindermäntel mit übereinstimmenden Durchmessern sind und voneinander lediglich durch einen die Aufnahme bildenden Spalt getrennt sind.

Der Benutzer, sprich der Radfahrer, braucht daher lediglich den Schuheinsatz an beliebiger Stelle auf einen der Aufnahmeteile aufzusetzen und findet durch ein Entlangfahren sicher den Spalt. Es entfällt somit das relativ mühsame Positionieren des Rastelementes zwischen zwei Aufnahmeschalen.

Vorteilhafter Weise ist der eine Mantelabschnitt die Außenseite eines Abschnittes einer Hülse, welche einen weiteren Abschnitt aufweist, der von einer weiteren Hülse umgeben ist, deren Außenseite den anderen Mantelabschnitt aufweist oder bildet. Das Pedal ist daher weiterhin sehr einfach aufgebaut und funktioniert grundsätzlich bzw. weitgehend wie das aus dem österreichischen Patent Nr. 411 899 bekannte Pedal. Der Schuheinsatz kann auf einfache Weise im Bereich von Freistellungen radial innerhalb der miteinander fluchtenden und voneinander beabstandeten Stirnseiten der weiteren Hülse und des erwähnten Hülsenabschnittes einrasten.

Weitere Merkmale, Vorteile und Einzelheiten der Erfindung werden nun anhand der Zeichnung, die ein Ausführungsbeispiel darstellt, näher beschrieben. Dabei zeigen
Fig. 1 das Pedal in Schrägansicht,
Fig. 2 einen Längsschnitt durch das Pedal gemäß Fig. 1,
Fig 3 und Fig. 4 Bestandteile des Schuheinsatzes in Schrägansicht,
Fig. 5 den kompletten Schuheinsatz in Schrägansicht, Fig. 6 eine Frontansicht desselben,
Fig. 7 das Pedal mit eingerasteten Schuheinsatz in Schrägansicht,
Fig. 8 einen Längsschnitt durch das Pedal mit eingerasteten Schuheinsatz,
Fig. 9 eine Draufsicht auf das Pedal mit eingerasteten Schuheinsatz und
Fig. 10 eine Stellung des Schuheinsatzes gegenüber dem Pedal während des Lösens der Verrastung des Schuheinsatzes.

Zum Pedal 1 gehören in der nachfolgenden Beschreibung sämtliche zur Anordnung bzw. zur Befestigung der am Fahrrad vorgesehenen Bestandteile, zum Schuheinsatz 12 jene Bestandteile, die für eine Befestigung an einer Schuhsohle vorgesehen sind.

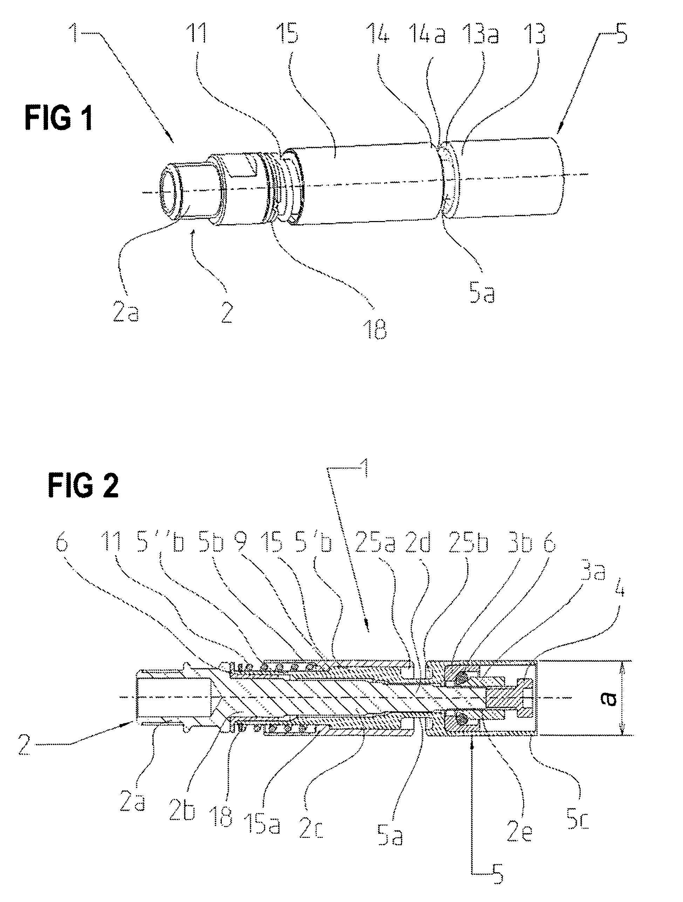

Fig. 1 und Fig. 2 zeigen den Aufbau und die einzelnen Bestandteile des Pedals 1. Das Pedal 1 weist einen Achsteil 2 auf, welcher an der Kurbel des nicht gezeigten Fahrrades fest verschraubt wird und die Längsachse des Pedals 1 definiert. Der Achsteil 2 besteht aus mehreren zylindrischen und zueinander konzentrisch angeordneten Abschnitten 2a, 2b, 2c, 2d, 2e mit unterschiedlichen Durchmessern. Der Endabschnitt 2a ist mit einem äußeren Gewinde versehen und dient zum Anschrauben des Pedals 1 an der Kurbel des Fahrrades. Die an den Endabschnitt 2a anschließenden und aufeinander folgenden Abschnitte 2b bis 2e, letzterer bildet den äußeren Endabschnitt, weisen schrittweise kleinere Durchmesser auf. Die Abschnitte 2b bis 2e sind von einer Hülse 5 umgeben, die am Achsteil 2 drehbar gelagert ist, gegenüber dem Achsteil 2 in Axialrichtung aber unverschiebbar angeordnet ist. Die Hülse 5 weist drei Abschnitte auf, einen äußeren, zylindrischen Hülsenabschnitt 5c mit einem konstanten äußeren Durchmesser a, einen zentralen Hülsenabschnitt 5a, mit welchem die Hülse 5 auf dem Abschnitt 2d des Achsteils 2 sitzt und dessen Außendurchmesser nur geringfügig größer ist als der Außendurchmesser des Abschnittes 2b, und einen inneren Hülsenabschnitt 5b, der Großteils von einer weiteren zylindrischen Hülse 15 umhüllt ist, deren Außendurchmesser dem Außendurchmesser a des Hülsenabschnittes 5c entspricht. Die Außenseite der Hülse 15 und die Außenseite des Hülsenabschnittes 5c bilden derart Abschnitte der Mantelfläche eines Zylinders des Durchmessers a.

Eine auf dem äußeren Endabschnitt 2e des Achsteils 2 sitzende, beispielsweise angeschraubte Mutter mit Lagerschulter 3a, welche durch eine Schraube 4 gesichert ist, bildet gemeinsam mit einem zweiten Ring 3b und Kugeln 6 ein Kugellager zur drehbaren Lagerung der Hülse 5 am Achsteil 2. Am Ende des Hülsenabschnittes 5b ist zwischen diesem und dem Achsteil 2 ein Gleitlager 6 angeordnet.

Der innere Hülsenabschnitt 5b besteht aus zwei Unterabschnitten 5'b, 5"b, wobei der Unterabschnitt 5'b einen größeren Außendurchmesser aufweist als der Unterabschnitt 5"b und an den Abschnitt 5a der Hülse 5 anschließt. Zwischen den beiden konzentrisch zueinander angeordneten Unterabschnitten 5'b und 5"b ist eine umlaufende Schulter 9 gebildet, die als Anschlag für die Axialbewegung der weiteren Hülse 15 dient. Die weitere Hülse 15 ist in der in Fig. 2 gezeigten Lage vom äußeren Hülsenabschnitt 5c in Achsrichtung durch einen Spalt getrennt. Die weitere Hülse 15 endet in einem Abstand vom Abschnitt 2a des Achsteils 2 bzw. in einem Abstand von einem am innenseitigen Ende des Unterabschnittes 5"b sitzenden Widerlager 18 für eine den Unterabschnitt 5"b umgebende Schraubendruckfeder 11. Die Feder 11 erstreckt sich in eine Aussparung der Hülse 15 und ist mit ihrem zweiten Ende an einem im Inneren der Hülse 15 umlaufenden Ansatz 15a abgestützt, welcher durch die Feder 11 gegen die Schulter 9 gedrückt wird. Die Hülse 15 ist daher derart gegen die Kraft der Feder 11 gegenüber dem Achsteil 2 in Richtung Fahrradkurbel verschiebbar. In der in Fig. 2 gezeigten Lage befindet sich die weitere Hülse 15 in ihrer Ausgangslage, in welcher der Stützansatz 15a an der Schulter 9 anschlägt. In dieser Lage überragt das dem Hülsenabschnitt 5c zugewandte Ende der weiteren Hülse 15 einen Teilbereich des Hülsenabschnittes 5a und bildet hier eine ringförmig umlaufende Freistellung bzw. Aussparung 25a. Eine weitere Freistellung bzw. Aussparung 25b, in Form einer ringförmig umlaufenden Nut, befindet sich gegenüber der Freistellung bzw. Aussparung 25a am Ende des Hülsenabschnittes 5c.

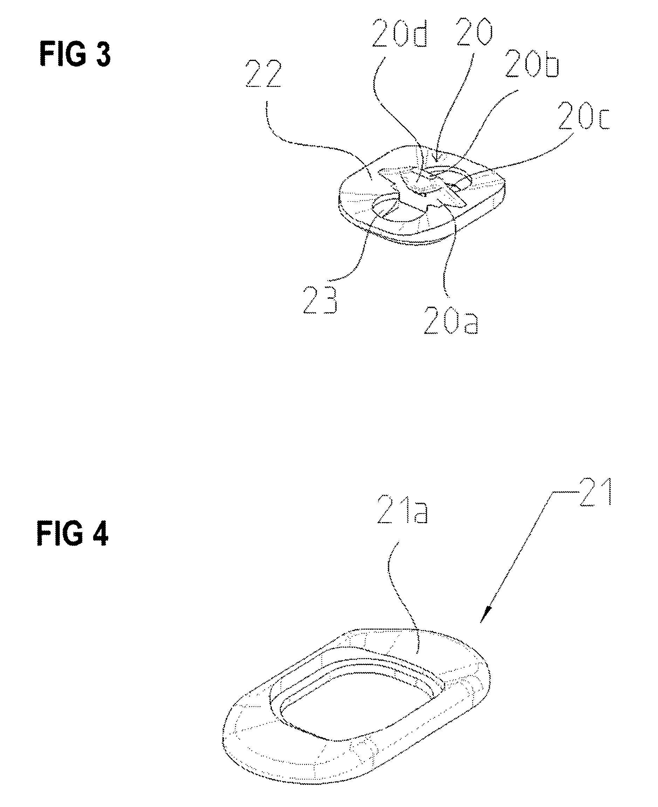

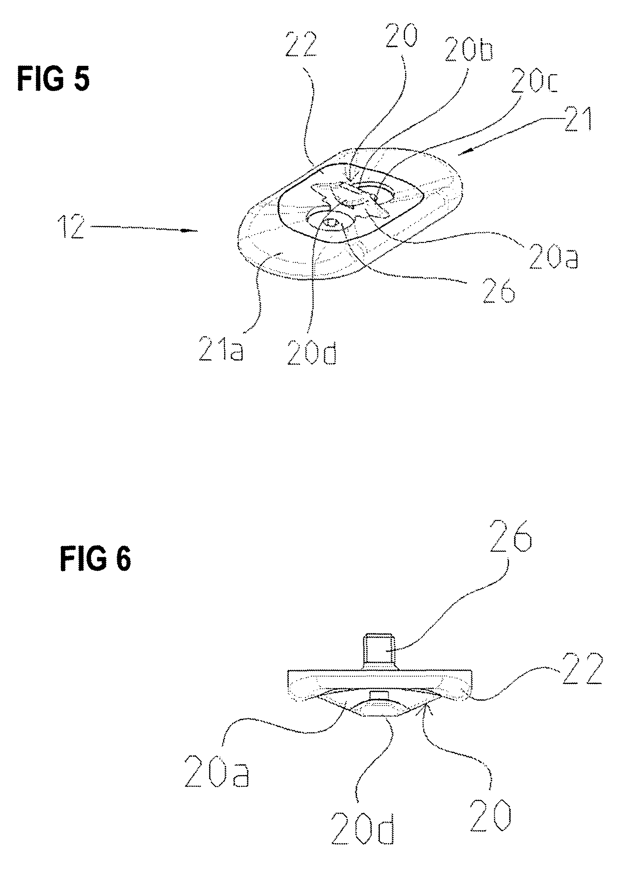

Fig. 3 bis Fig. 6 zeigen die Ausgestaltung und die Anordnung der Bestandteile des Schuheinsatzes 12. Die Hauptbestandteile des Schuheinsatzes 12 sind ein Rastelement 20 (Fig. 3) und ein Steuerelement 21 (Fig. 4). Das Rastelement 20 sitzt auf einem plattenförmigen Basisteil 22. Das Rastelement 20 ist ein länglicher Bauteil mit zwei etwa parallel zueinander verlaufenden, gleich großen und etwa in der Form von gleichschenkeligen Trapezen ausgeführten Seitenflächen 20a, zwei Stirnseiten 20c und einer diese verbindenden Oberseite 20b. Beidseitig der Oberseite 20b sind Stützschultern 20d ausgebildet. Der Basisteil 22 lässt sich in eine mittige Ausnehmung des Steuerelementes 21 einsetzen, durch an beiden Seiten des Rastelementes 20 im Basisteil 22 vorgesehene Schraublöcher 23 lässt sich das Rastelement 20 gemeinsam mit dem Steuerelement 21 mittels Schrauben 26 (Fig. 5, Fig. 6) mit dem Schuh verbinden. Das Rastelement 20 ist dann in Sohlenlängsrichtung orientiert.

Zu beiden Seiten des Rastelementes 20 sind am Steuerelement 21 Stützflügel 21a vorgesehen. An jener Seite, an welcher das Rastelement 20 vorsteht, sind die Stützflügel 21a mit je einer Rundung versehen, deren Radien etwas größer sind als der Radius der zylindrischen Außenfläche des Hülsenabschnittes 5c der Hülse 5 und der weiteren Hülse 15.

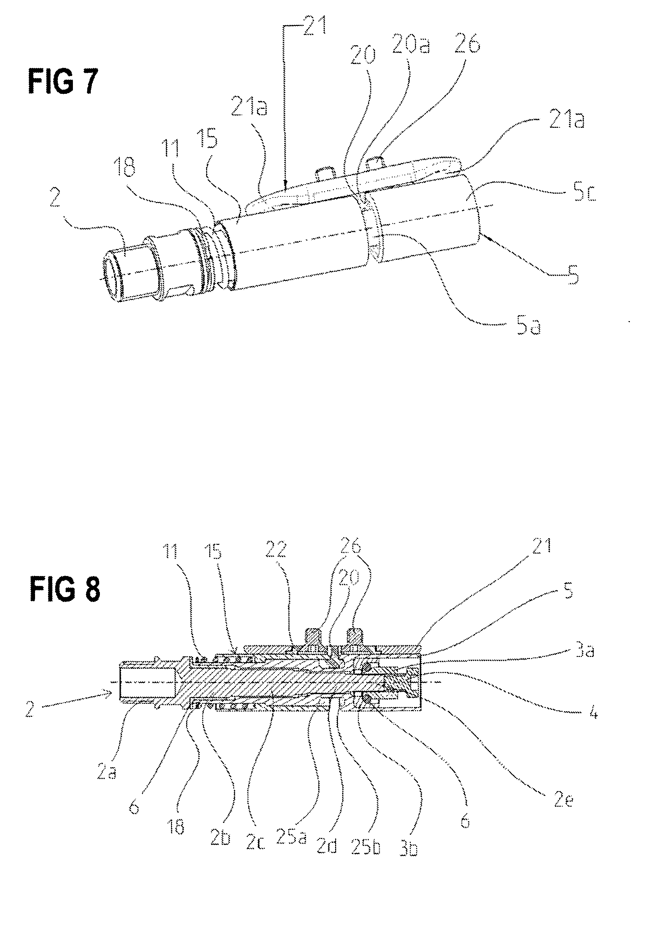

Fig. 7 bis Fig. 9 zeigen den Schuheinsatz 12 in seiner am Pedal eingesetzten Lage, das Rastelement 20 ist im Spalt zwischen dem Hülsenabschnitt 5c und der Hülse 15 eingerastet, wobei die Stützschultern 20d die einander zugewandten Ränder des Hülsenabschnittes 5c und der weiteren Hülse 15 untergreifen und sich somit in den Aussparungen 25a, 25b befinden. Die Stützflügel 21 a berühren mittig die Außenseiten der Hülsen 5 bzw. 15.

Bei der Erfindung ist das Einrasten des am Schuh des Benützers befestigten Schuheinsatzes 12 am Pedal 1 auf besonders einfache Weise möglich. Der Benützer bzw. Radfahrer braucht lediglich das Rastelement 20 entlang der Außenseiten der übereinstimmend zylindrisch ausgeführten Hülsen 5 und 15 bis zum Eingreifen in den Spalt zwischen diesen entlang zu führen und dann das Rastelement 20 unter Aufbringen von Druck zu verrasten. In der verrasteten Lage, wie sie beispielsweise in Fig. 8 gezeigt ist, befindet sich die Hülse 15 wieder in ihrer Ausgangslage. Der Schuheinsatz 12 ist nun mit dem Pedal 1 kraftschlüssig verbunden, sodass das Pedal 1 sowohl auf Zug als auch auf Druck belastbar ist. Während des Einsetzens des Rastelementes 20 wirken die beiden Stützflügel 21a in Folge ihrer besonderen Ausgestaltung auf das Positionieren des Rastelementes 20 zentrierend.

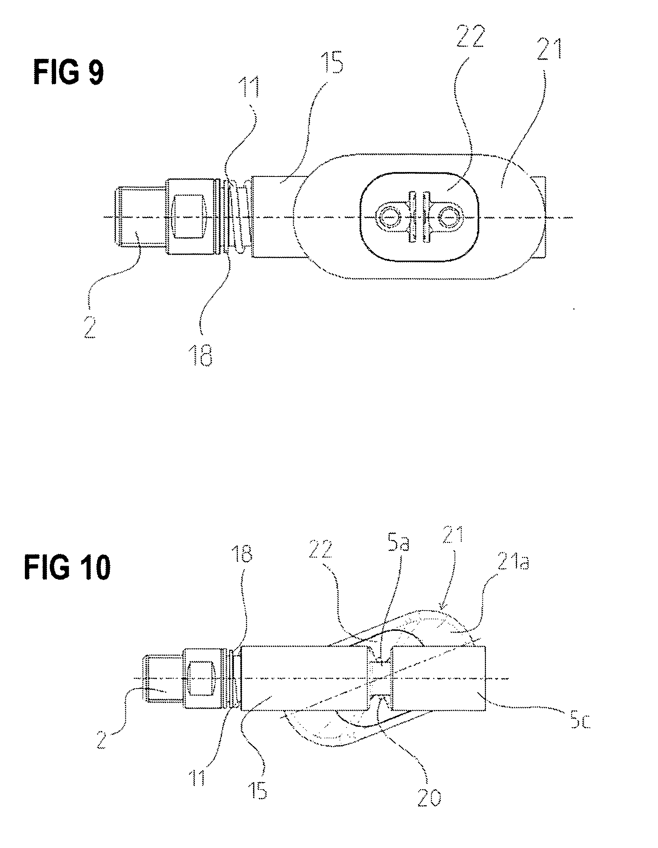

Das Lösen des Schuheinsatzes 12 vom Pedal 1 ist auch im Fall eines Sturzes des Radfahrers schnell und problemlos möglich. Selbst wenn vom Schuh auf das Pedal 1 eine Kraft ausgeübt wird, ist ein schnelles Lösen des Schuhs vom Pedal 1 durch ein Drehen des Schuhs in eine der beiden möglichen Richtungen gewährleistet. Ein Drehen des Schuhs und damit des Schuheinsatzes 12 hat zur Folge, dass wie Fig. 10 zeigt, das Rastelement 20 die Hülse 15 gegen die Kraft der Feder 11 axial verschiebt und der Spalt zwischen der Hülse 15 und dem Hülsenabschnitt 5c soweit vergrößert wird, dass das Rastelement 20 freikommt. Gleichzeitig bewirken die sich auf den Außenflächen des Hülsenabschnittes 5c und der Hülse 15 abstützenden und gleitenden Stützflügel 21c in Folge der erwähnten unterschiedlichen Radien ein Anheben des Schuheinsatzes 12 gegenüber dem Pedal 1. Die an diesen Bewegungsabläufen beteiligten Bauteile werden insbesondere derart ausgeführt und aufeinander abgestimmt, dass nach einem vergleichsweise kleinen Drehwinkel von beispielsweise etwa 10° die Stützschultern 20d bereits die Ränder des Hülsenabschnittes 5c und der Hülse 15 passieren. Dadurch kommt das Rastelement 20 praktisch automatisch frei.

Die Erfindung ist auf das dargestellte Ausführungsbeispiel nicht eingeschränkt. So ist es beispielsweise möglich, das Pedal 1 derart auszuführen, dass wahlweise eine der Hülsen gegen Federkraft verschiebbar angeordnet ist oder auch das beide Hülsen verschiebbar sind. Anstelle einer Feder können mehrere Federn vorgesehen sein.

## Patentansprüche

1. Pedal für ein Fahrrad, welches an einer Tretkurbel um eine Pedalachse (2) drehbar angeordnet ist, eine Feder und eine Aufnahme aufweist und mit einem an einem Schuh befestigbaren und ein Rastelement (20) aufweisenden Schuheinsatz (12) lösbar verbindbar ist, wobei die Verbindung durch Einrasten des Rastelementes (20) in der Aufnahme gegen Federkraft und das Lösen der Verbindung durch Ausführen einer Drehbewegung des Rastelementes (20) erfolgt, wobei die Aufnahme zur Pedalachse (2) rotationssymmetrisch ausgeführt bzw. angeordnet und durch zwei Aufnahmeteile (15,5c) gebildet ist, welche gegen die Kraft zumindest der Feder, insbesondere einer Druckfeder, in Richtung Pedalachse (2) voneinander wegbewegbar sind,
**dadurch gekennzeichnet,**
**dass** die Außenseiten der beiden Aufnahmeteile (15, 5c) miteinander fluchtende Zylindermäntel mit übereinstimmenden Durchmessern (a) sind und voneinander lediglich durch einen die Aufnahme bildenden Spalt getrennt sind.

2. Pedal nach Anspruch 1, **dadurch gekennzeichnet, dass** der eine Mantelabschnitt die Außenseite eines Abschnittes (5c) einer Hülse (5) ist, welche einen weiteren Abschnitt (5b) aufweist, der von einer weiteren Hülse (15) umgeben ist, deren Außenseite den anderen Mantelabschnitt aufweist oder bildet.

3. Pedal nach Anspruch 1 oder 2, **dadurch gekennzeichnet, dass** der Schuheinsatz im Bereich von Freistellungen (25a, 25b) radial innerhalb der miteinander fluchtenden und voneinander beabstandeten Stirnseiten der weiteren Hülse (15) und des Hülsenabschnittes (5c) einrastbar ist.

## Claims

1. Pedal for a cycle, which is arranged on a pedal crank such that it can rotate about a pedal axis (2), has a spring and a receptacle, and can be releasably connected to a shoe insert (12) which can be fixed to a shoe and has a locking element (20), wherein the connection takes place by the locking element (20) locking into the receptacle counter to a spring force, and the connection is released by executing a rotary movement of the locking element (20), wherein the receptacle is configured or arranged in a rotationally symmetrical manner with respect to the pedal axis (2) and is formed by two receptacle parts (15, 5c) which can be moved away from each other in the direction of the pedal axis (2) counter to the force at least of the spring, in particular a pressure spring,
**characterised in that**
the outer sides of the two receptacle parts (15, 5c) are cylindrical surfaces which align with each other and have matching diameters (a) and are separated from each other only by a gap which forms the receptacle.

2. Pedal according to Claim 1, **characterised in that** one surface section is the outer side of a section (5c) of a bushing (5) which has a further section (5b) which is surrounded by a further bushing (15), the outer side of which has or forms the other surface section.

3. Pedal according to Claim 1 or 2, **characterised in that** the shoe insert can be locked radially inside the ends, which are aligned with each other and are at a distance from each other, of the further bushing (15) and the bushing section (5c) in the region of clearances (25a, 25b).

## Revendications

1. Pédale pour un vélo, qui est disposée sur une manivelle de pédalier de façon à pouvoir tourner autour d'un axe de pédale (2), présente un ressort et un logement et peut être reliée de façon amovible à un insert de chaussure (12) fixable sur une chaussure et présentant un élément d'encliquetage (20), la liaison s'effectuant par l'enclenchement de l'élément d'encliquetage (20) dans le logement contre la force du ressort et le détachement de la liaison par l'exécution d'un mouvement de rotation de l'élément d'encliquetage (20), le logement pour l'axe de pédale (2) étant réalisé respectivement disposé avec une symétrie de rotation et étant formé par deux parties de logement (15, 5c), lesquelles peuvent être déplacées en partant l'une de l'autre en direction de l'axe de pédale (2) contre la force au moins du ressort, en particulier d'un ressort de pression,
**caractérisée en ce que**
les côtés extérieurs des deux parties de logement (15, 5c) sont des enveloppes de cylindre alignées l'une avec l'autre avec des diamètres (a) coïncidents et sont séparés les uns des autres uniquement par une fente formant le logement.

2. Pédale selon la revendication 1, **caractérisée en ce qu'**une partie d'enveloppe est le côté extérieur d'une partie (5c) d'une douille (5), qui présente une autre partie (5b) qui est entourée d'une autre douille (15), dont le côté extérieur présente ou forme l'autre partie d'enveloppe.

3. Pédale selon la revendication 1 ou 2, **caractérisée en ce que** l'insert de chaussure peut être encliquetée dans la zone de positions libres (25a, 25b) radialement à l'intérieur des côtés avant, alignés les uns avec les autres et espacés les uns des autres de l'autre douille (15) et de la partie de douille (5c).
